# FASCICULE DE BREVET EUROPEEN

(11) **EP 3 073 650 B1**
(45) Date de publication et mention de la délivrance du brevet: **04.07.2018**
(21) Numéro de dépôt: 16162461.4
(22) Date de dépôt: 25.03.2016
(51) Int. Cl.: H04B 10/114, H04B 10/116

(54) **DISPOSITIF D'ÉCLAIRAGE ET DE COMMUNICATION OPTIQUE COMBINÉ**
KOMBINIERTE VORRICHTUNG FÜR BELEUCHTUNG UND OPTISCHE KOMMUNIKATION
COMBINED LIGHTING AND OPTICAL COMMUNICATION DEVICE

(30) Priorité: 27.03.2015 FR 1552604
(43) Date de publication de la demande: 28.09.2016
(73) Titulaire: Orange, 75015 Paris (FR)
(72) Inventeur: DUSSAUME, Philippe, 35460 Tremblay (FR); PERRUFEL, Micheline, 35740 Pace (FR); BOUCHET, Olivier, 35700 Rennes (FR)

(56) Documents cités:
- US-A1- 2008 215 391
- KUMAR AMBUJ ET AL: "Visible Light Communications (VLC) for Ambient Assisted Living", WIRELESS PERSONAL COMMUNICATIONS, SPRINGER, DORDRECHT, NL, vol. 78, no. 3, 22 juillet 2014 (2014-07-22), pages 1699-1717, XP035381355, ISSN: 0929-6212, DOI: 10.1007/S11277-014-1901-1 [extrait le 2014-07-22]
- CHEN HSI-CHAO ET AL: "Investigation of optical intensity in indoor visible light communication with different LEDs array", PROCEEDINGS OF SPIE, S P I E - INTERNATIONAL SOCIETY FOR OPTICAL ENGINEERING, US, vol. 9190, 25 septembre 2014 (2014-09-25), pages 919017-919017, XP060040421, ISSN: 0277-786X, DOI: 10.1117/12.2060523 ISBN: 978-1-62841-730-2
- J-W WHANG A ET AL: "Designing Uniform Illumination Systems by Surface-Tailored Lens and Configurations of LED Arrays", JOURNAL OF DISPLAY TECHNOLOGY, IEEE SERVICE CENTER, NEW YORK, NY, US, vol. 5, no. 3, 1 mars 2009 (2009-03-01), pages 94-103, XP011267586, ISSN: 1551-319X, DOI: 10.1109/JDT.2008.2001865

## Description

### DOMAINE TECHNIQUE

La présente invention se rapporte au domaine des communications sans fil et plus particulièrement au domaine des transmissions de données basées sur l'utilisation de la lumière visible.

### ART ANTÉRIEUR

Des progrès importants ont été réalisés depuis plusieurs années dans le domaine des communications sans fil. En particulier, des standards de connexion tels que la 4G, le Wifi, Wimax ou encore le Bluetooth permettent aux utilisateurs d'accéder à toutes sortes de services en ligne avec une très bonne qualité de service. Ces technologies reposent sur l'utilisation du spectre électromagnétique pour transmettre les données.

On observe aujourd'hui l'émergence de technologies permettant de transmettre des données à haut débit par modulation de la lumière visible émise par des luminaires tels que par exemple des lampes à LEDs (diodes électroluminescentes ou Light Emitting Diode en anglais). Le LiFi (Light Fidelity) est un exemple de standard de communication sans fil basé sur l'utilisation de la lumière visible.

Ces technologies de transmission présentent de nombreux avantages. Elles permettent, en tirant partie des nombreux points d'éclairages installés dans les habitations, les bureaux, les transports ou les lieux publics, de multiplier les points d'accès réseau sans risque de saturation des fréquences dans le spectre électromagnétique. Elles présentent également un intérêt pour la sécurité car la zone de couverture est visible à l'oeil nu et limitée à la zone d'éclairage. Ainsi, de telles lampes installées par exemple au-dessus de bureaux dans un open-space permettent par exemple garantir que seuls les équipements directement éclairés par ces lampes pourront bénéficier de la connexion.

Pour établir une connexion avec un équipement spécifique il est parfois utile de pouvoir orienter le faisceau de lumière vers un emplacement particulier et de calibrer la taille de ce faisceau de manière à ce que les données transmises ne soient accessibles que depuis cet emplacement. Pour cela, il est possible d'utiliser un spot orientable, ou bien de manière plus avantageuse encore, d'utiliser un dispositif d'éclairage offrant une possibilité d'ajustement du faisceau lumineux, comme par exemple un dispositif à base de lentilles tel que celui décrit dans la demande de brevet internationale WO 2012139335 A1.

Malheureusement, lorsque le faisceau de lumière est ainsi orienté et concentré vers un point particulier, la capacité d'éclairage ambiant du luminaire est fortement diminuée et d'autres lampes, dédiées à la fonction d'éclairage, doivent être installées.

Le document de Kumar Ambuj et Al. « Visible light Communications (VLC), Wireless Personal Communications, Springer, Dordrechts, NL, Vol. 78, no. 3 du 22 juillet 2014 divulgue un dispositif de communication VLC (Visible Light communication) dans lequel des diodes adaptées pour transmettre des données dans la lumière visible sont disposées de façon concentrique sur un plateau circulaire comprenant une partie périphérique et une partie centrale, le centre du plateau comprenant une zone photosensible adaptée pour recevoir des données transmises dans la lumière visible.

La demande de brevet US 2008/215391A1 (Dowling Kevin et Al. du 4 septembre 2008 décrit un dispositif d'éclairage comprenant une unité d'éclairage centrale adaptée pour produire, par exemple au moyen d'une lentille, un faisceau lumineux de taille déterminée. Des emplacements disposés autour de cette source lumineuse centrale peuvent accueillir des modules interchangeables, comme par exemple un module de communication.

Toutefois, les techniques exposées dans ces documents ne permettent pas de modifier les caractéristiques d'un faisceau lumineux porteur d'information sans impact notable sur les capacités d'éclairage du dispositif.

Il existe donc un besoin pour une solution technique permettant de modifier les caractéristiques d'un faisceau lumineux porteur d'information sans impact notable sur les capacités d'éclairage du dispositif.

### RÉSUMÉ DE L'INVENTION

À cet effet, l'invention concerne un dispositif d'éclairage comportant une pluralité de sources lumineuses montées sur un plateau, caractérisé en ce qu'il comporte :
- un premier ensemble de sources lumineuses implanté dans une zone centrale du plateau,
- un second ensemble de sources lumineuses implanté dans une zone périphérique du plateau,
les sources lumineuses d'un des ensembles étant adaptées pour la transmission de données par modulation de la lumière visible, les sources lumineuses d'au moins un des ensembles étant associées à au moins une première lentille convergente fixe positionnée dans l'axe desdites sources.

Le dispositif comprend un plateau sur lequel sont implantées des sources lumineuses. Il peut s'agir par exemple d'une plaque de circuit imprimé sur lequel sont implantées des LEDs. Une partie des sources lumineuses, par exemple celles situées au centre du plateau, est adaptée pour transmettre des données sous la forme d'un signal optique. L'autre partie des sources lumineuses, implantée par exemple en périphérie du plateau, offre une fonction d'éclairage classique. Le dispositif comporte en outre une pluralité de lentilles disposées au moins devant les sources lumineuses adaptées pour transmettre des données. Les lentilles destinées à la partie centrale peuvent avoir des caractéristiques différentes des lentilles destinées à la partie périphérique afin de produire des faisceaux dont les caractéristiques sont différentes. Les lentilles sont ainsi positionnées de façon à capter la lumière issue des sources lumineuses et former un faisceau de lumière dont les caractéristiques dépendent des lentilles utilisées. Ainsi, les sources lumineuses adaptées pour l'éclairage seul peuvent ne pas disposer de lentilles et émettre une lumière diffuse qui participe à l'éclairage ambiant, alors que la lumière issue des sources lumineuses aptes à transmettre des données peut être concentrée en un faisceau permettant de cibler un emplacement particulier. Un unique dispositif selon l'invention permet ainsi de procurer un éclairage ambiant satisfaisant tout en garantissant un transfert de données optimal vers un emplacement spécifique.

Selon un mode particulier de réalisation, le dispositif est tel que les sources lumineuses sont des LEDs Le dispositif peut utiliser des LEDs pour la fonction d'éclairage et de transmission de de données. Les LEDs sont particulièrement adaptées à la transmission de données car elles sont peu onéreuses, compactes, consomment peu d'énergie et présentent une capacité de modulation de la lumière à haute fréquence autorisant des débits de transmission élevés.

Selon une réalisation particulière, le dispositif est tel qu'il comporte en outre, disposés parallèlement au plateau et superposés aux sources lumineuses et premières lentilles:
- Un premier élément adapté à la zone centrale comportant un premier ensemble de lentilles divergentes, chacune des lentilles étant disposée dans l'axe d'une source lumineuse de la zone centrale, et
- Un second élément adapté à la zone périphérique comportant un second ensemble de lentilles divergentes, chacune des lentilles étant disposée dans l'axe d'une source lumineuse de la zone périphérique.

Des lentilles divergentes sont disposées dans l'axe des sources lumineuses de façon à recevoir la lumière issue des sources lumineuses ou des premières lentilles convergentes. Les lentilles divergentes du premier ensemble peuvent avoir des caractéristiques différentes de celles du second ensemble. Le dispositif peut ainsi émettre deux faisceaux de lumière concentriques dont les angles d'ouvertures sont différents. De cette façon, le dispositif peut offrir par exemple un premier faisceau étroit destiné à transmettre des données vers un emplacement précis et un second un faisceau plus large destiné à l'éclairage ambiant. Les premières lentilles convergentes fixes associées aux sources lumineuses permettent de concentrer la lumière émise par les sources lumineuses vers les lentilles divergentes.

Selon un mode de réalisation particulier, le dispositif est tel que les premiers et seconds éléments sont mobiles par translation selon un axe perpendiculaire au plateau.

Les premiers et seconds éléments peuvent ainsi être déplacés en restant parallèle au plateau sur lequel sont montés les premiers et seconds ensembles de sources lumineuses. Il est ainsi possible d'ajuster indépendamment la distance entre le premier élément adapté à la zone centrale et les sources lumineuses de la zone centrale et la distance entre le second élément adapté à la zone périphérique et les sources lumineuses de la zone périphérique. Les premiers et seconds éléments ne sont mobiles que par translation selon un axe perpendiculaire au plateau supportant les sources lumineuses de façon à préserver l'alignement des sources, des premières lentilles convergentes et des lentilles divergentes.

Le dispositif permet ainsi de modifier les caractéristiques des faisceaux émis par le dispositif en modifiant la distance entre la source lumineuse et la lentille divergente.

Selon un mode particulier de réalisation de l'invention, le dispositif comporte un mécanisme de réglage adapté pour appliquer une translation selon un axe perpendiculaire au plateau à au moins un des ensembles de lentilles divergentes.
Le mécanisme de réglage permet à un utilisateur d'ajuster au moins un des faisceaux de lumière émis par le dispositif. Par exemple, le dispositif peut comporter une première molette permettant d'ajuster la distance entre le premier ensemble de lentilles divergentes et les sources lumineuses et une seconde molette permettant d'ajuster la distance entre le second ensemble de lentilles divergentes et les sources lumineuses.
Les faisceaux émis par le dispositif peuvent ainsi être modifiés par un utilisateur. Par exemple, dans le cas où les sources lumineuses de la partie centrale sont adaptées pour transmettre des données alors que les sources de la partie périphérique sont adaptées pour une unique fonction d'éclairage, un utilisateur peut augmenter ou réduire l'écart entre le premier élément correspondant à la zone centrale et comportant des sources lumineuses adaptées à la transmission de données et les premières lentilles convergentes afin d'obtenir un faisceau d'éclairage offrant un angle d'ouverture plus ou moins important.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La **figure 1** illustre de manière schématique différents élément composant le dispositif d'éclairage, selon un mode particulier de réalisation de l'invention,
- La **figure 2** représente un plateau circulaire sur lequel sont implantées deux ensembles de diodes électroluminescentes selon un mode particulier de réalisation,
- La **figure 3** illustre un élément optique composé d'un assemblage de lentilles convergentes selon une réalisation particulière de l'invention,
- La **figure 4a** représente un anneau comprenant un ensemble de lentilles divergentes,
- La **figure 4b** représente un disque comprenant un autre ensemble de lentilles convergentes,
- Les **figures 5a et 5b** illustrent un assemblage de lentilles convergentes et divergentes adapté pour produire un faisceau de lumière particulier à partir d'une source lumineuse.
- La **figure 6a** montre un exemple d'agencement des composants du dispositif, selon une réalisation particulière, permettant de produire deux faisceaux de lumière de caractéristiques différentes, et
- La **figure 6b** montre un autre agencement des composants du dispositif, selon un mode particulier de réalisation, permettant de produire deux autres faisceaux de lumière de caractéristiques différentes, et
- La **figure 7** représente de manière schématique une vue éclatée d'un dispositif selon l'invention.
- **La** **figure 8** illustre de manière simplifiée et non limitative un assemblage de composants électroniques adapté pour fournir une fonction d'éclairage seul et une fonction d'éclairage avec transmission de données selon un mode particulier de réalisation de l'invention.

### DESCRIPTION DÉTAILLÉE

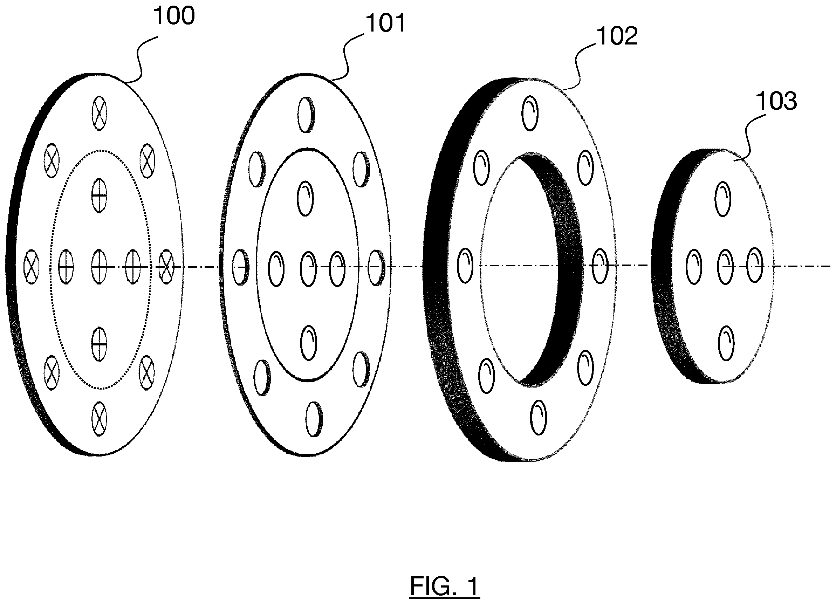

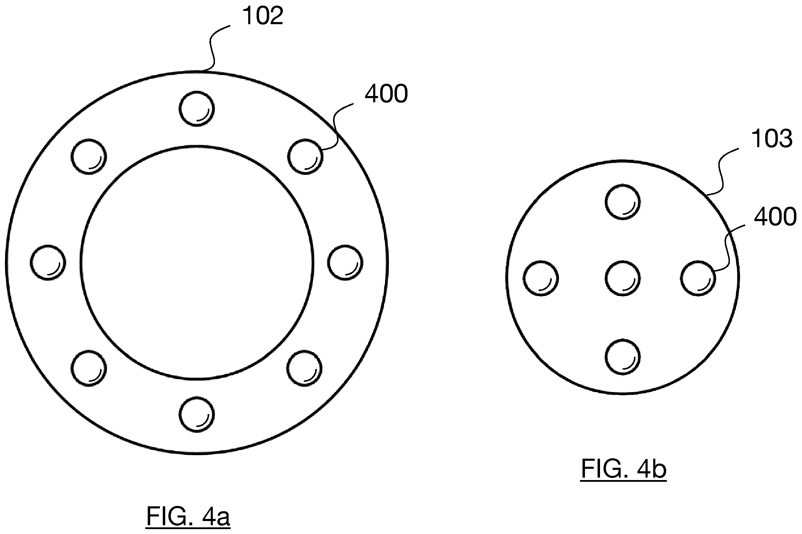

Les **figures 1 à 4** représentent, selon un mode particulier de réalisation, différents éléments constituant un dispositif d'éclairage et de communication optique combiné.

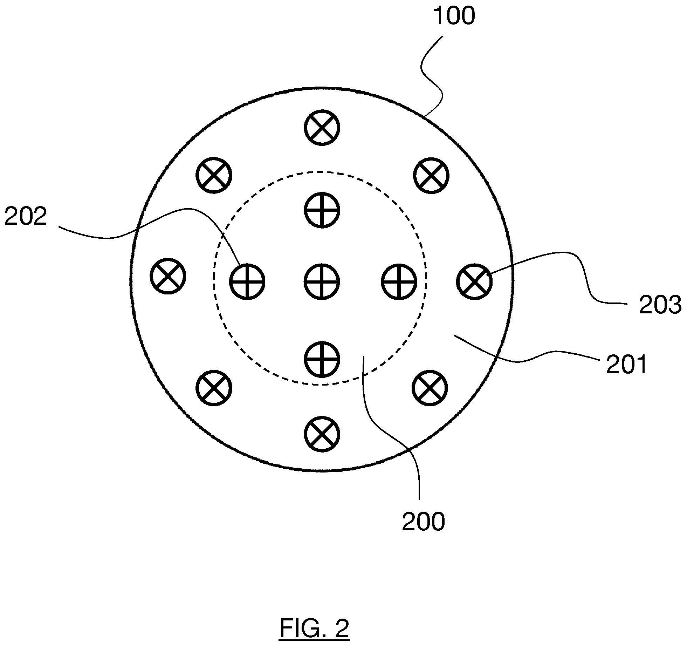

Sur un plateau circulaire 100 sont implantées des sources lumineuses, comme par exemple des diodes électroluminescentes. Une zone centrale 200 du plateau 100 supporte des LEDs adaptées pour la transmission de données dans le spectre optique. Par exemple, la LED 202 est apte à transmettre des données par modulation de la lumière visible. Pour cela, ces LEDs sont par exemple reliées à un composant de modulation adapté, comme par exemple le microcontrôleur RL78/I1A commercialisé par la société Renesas™. La partie centrale 200 peut comprendre une ou plusieurs LEDs. Une zone périphérique 201 supporte des LEDs dédiées uniquement à l'éclairage qui ne sont pas adaptées pour transmettre des données. Par exemple, la LED 203 représentée sur la **figure 2** n'est pas connectée à un composant de modulation et sert uniquement pour l'éclairage. Selon un autre mode de réalisation, les sources lumineuses permettant de transmettre des données sont situées dans la zone périphérique alors que les LEDs participant uniquement à l'éclairage sont situées dans la zone centrale.

Un support 101 comprend une zone centrale 302 correspondant à la zone centrale 200 du plateau 100 et une zone périphérique 301 correspondant à la zone périphérique 201 du plateau 100. Des lentilles convergentes telles que la lentille 304, sont montées à des emplacements prévus à cet effet sur la zone centrale 302. L'emplacement des lentilles convergentes est déterminé de façon à ce que chaque lentille soit positionnée en regard d'une source lumineuse lorsque le support 101 est positionné sur le plateau 100. Ainsi, la lumière émise pas une source lumineuse de la zone centrale du plateau 100 est reçue par une lentille et redirigée en un faisceau convergent.

Selon un mode de réalisation particulier, les lentilles convergentes sont montées à des emplacements prévus dans la zone périphérique du support 101. L'emplacement des lentilles convergentes est déterminé de façon à ce que chaque lentille soit positionnée en regard d'une source lumineuse lorsque le support 101 est positionné sur le plateau 100. Ainsi, la lumière émise pas une source lumineuse de la zone périphérique du plateau 100 est reçue par une lentille et redirigée en un faisceau convergent.

Selon une réalisation particulière, des lentilles convergentes sont montées à des emplacements de la zone centrale et à des emplacements de la zone périphérique, les emplacements correspondant aux emplacements des sources lumineuses lorsque le support 101 est assemblé avec le plateau 100. Les lentilles de la zone centrale et celle de la zone périphérique pouvant avoir des caractéristiques optiques différentes.

Selon un mode particulier de réalisation, le support 101 et le plateau 100 sont une même pièce, les lentilles convergentes étant alors directement intégrées dans les sources lumineuses. Il peut s'agir par exemple de LEDs disposant d'une optique intégrée ou de LEDs auxquelles sont ajoutées des lentilles à l'aide d'un porte lentille.

De cette façon, le dispositif permet de produire deux faisceaux concentriques dont un est utilisé pour transmettre des données et l'autre pour l'éclairage uniquement, les faisceaux pouvant avoir des caractéristiques différentes telles que par exemple un angle d'ouverture large pour le faisceau extérieur dédié à l'éclairage uniquement et un angle d'ouverture étroit pour le faisceau interne disposant d'une capacité de transmission de données. Un tel dispositif peut avantageusement être monté sur un support de lampe de dimensions standard, comme par exemple une lampe type spot, de façon à pouvoir être installé facilement à des emplacements déjà prévu pour l'éclairage.

Selon un mode de réalisation particulier, le dispositif comprend en outre un premier élément 103 adapté à la zone centrale comportant un premier ensemble de lentilles divergentes comme par exemple une lentille 400, chacune des lentilles étant disposée dans l'axe d'une source lumineuse de la zone centrale, et un second élément 102 adapté à la zone périphérique comportant un second ensemble de lentilles divergentes, chacune des lentilles étant disposée dans l'axe d'une source lumineuse de la zone périphérique. Il est ainsi possible d'obtenir deux faisceaux dont les caractéristiques diffèrent en positionnant les éléments 102 et 103 à des distances respectivement différentes du support 101.

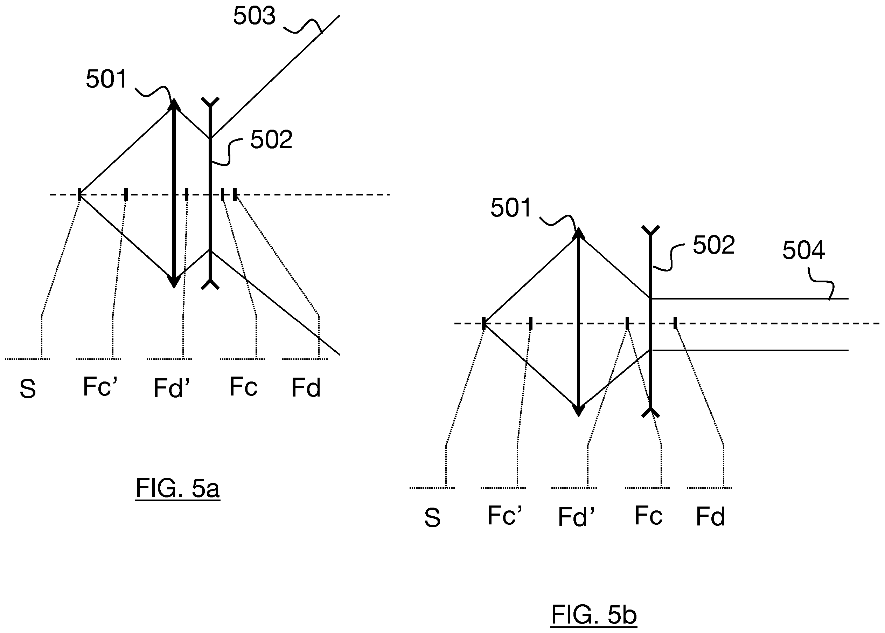

Les **figures 5a et 5b** illustrent deux exemples de positionnement d'une lentille convergente et d'une lentille divergente par rapport à une source lumineuse S. Dans cet exemple, la distance focale des lentilles divergentes 502 montées sur les éléments 102 et 103 correspond à la moitié de la distance focale des premières lentilles convergentes 501 du support 101. Ainsi, si par exemple les foyers Fc et Fc' de la lentille 501 sont situés à 10 mm du centre optique de la lentille 501, les foyers Fd et Fd' de la lentille 502 sont situés à 5 mm du centre optique de la lentille 502. La lentille convergente 501 est positionnée de façon à ce que la distance entre la source lumineuse S et le foyer Fc' soit identique à la distance entre le foyer Fc' et le centre optique de la lentille 501.

La **figure 5a** illustre un cas ou la lentille divergente 502 est positionnée entre le centre optique de la lentille convergente 501 et son foyer Fc. Dans cette configuration, la lumière émise par la source S produit un faisceau 503 possédant un large angle d'ouverture en sortie de la lentille divergente 502.

La **figure 5b** illustre un cas ou la lentille divergente 502 est positionnée de manière à ce que les foyers Fc et Fd' soient superposés, c'est-à-dire que le foyer Fd est à une distance du centre optique de la lentille 501 qui est égale à la distance entre la source S et le centre optique de la lentille 501. Dans cette configuration, la lumière émise par la source S produit un faisceau étroit et parallèle 504 en sortie de la lentille divergente 502.

Selon une réalisation particulière, les premiers et seconds éléments 103 et 102 sont mobiles par translation selon un axe perpendiculaire au plateau. Les éléments 102 et 103 supportant les lentilles divergentes, il est ainsi possible de faire varier la distance entre les lentilles convergentes du support 101 et les lentilles divergentes des éléments 102 et 103 de façon à modifier les caractéristiques des faisceaux. La distance entre le support 101 et l'élément 103 peut être différente de la distance entre le support 101 et l'élément 102. De cette manière, il est possible d'obtenir deux faisceaux concentriques de caractéristiques différentes en sortie du dispositif. En particulier, le dispositif permet de produire à la fois un faisceau étroit issu des sources lumineuses adaptées à la transmission de données et un faisceau plus large issu des sources lumineuses destinées à l'éclairage seul.

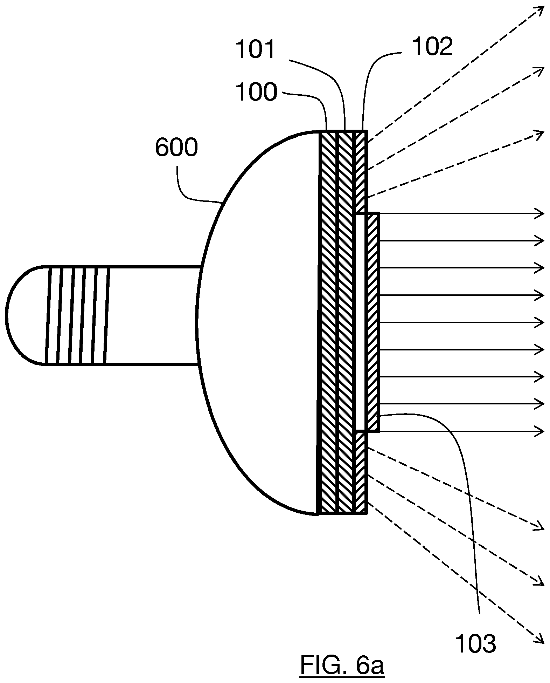

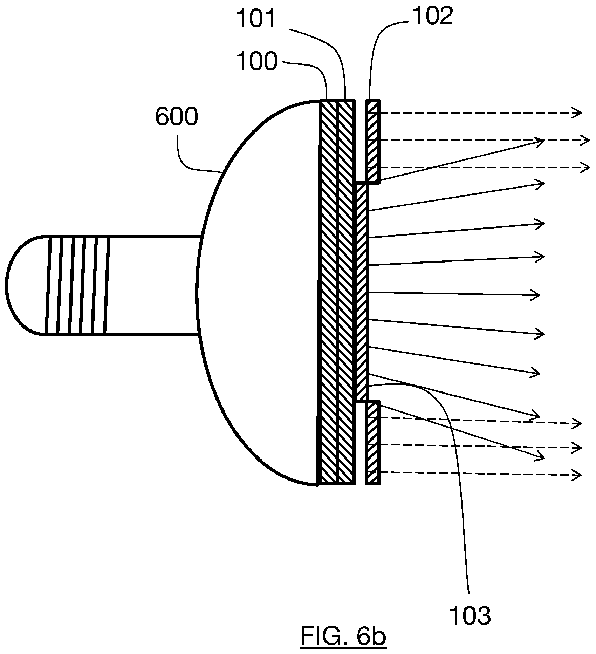

Les **figures 6a** **et** **6b** représentent une coupe schématique d'un dispositif selon un mode particulier de réalisation de l'invention. Un support 101 comportant des lentilles convergentes est positionné sur un plateau 100 sur lequel sont montées des sources lumineuses, le support étant disposé de manière à ce que chaque lentille convergente soit positionnée en face d'une source lumineuse. Les éléments 102 et 103 respectivement adaptés à la zone périphérique et à la zone centrale du dispositif comprennent des lentilles divergentes, les sources lumineuses, lentilles convergentes et lentilles divergentes étant alignées. Les éléments 102 et 103 sont uniquement mobiles par translation selon un axe perpendiculaire au plateau 100, permettant ainsi de faire varier la distance entre les lentilles convergentes et les lentilles divergentes tout en conservant l'alignement des sources, lentilles convergentes et lentilles divergentes.

La **figure 6a** représente le dispositif dans une configuration dans laquelle l'élément central 103 a subit une translation par rapport au support 101 de façon à ce que la distance entre le support de lentilles convergentes 101 et l'élément central 103 soit supérieure à la distance entre le support 101 et l'élément périphérique 102. Cette configuration permet de concentrer en un faisceau étroit la lumière émise par les sources de la zone centrale.

La **figure 6b** représente le dispositif dans une configuration dans laquelle l'élément périphérique 102 a subit une translation par rapport au support 101 de façon à ce que la distance entre le support de lentilles convergentes 101 et l'élément périphérique 102 supportant des lentilles divergentes soit supérieure à la distance entre le support 101 et l'élément central 103. Cette configuration permet de d'éclairer une large zone à partir des sources lumineuses de la partie centrale tout en restreignant la zone éclairée par les sources de la partie périphérique.

Selon un mode de réalisation particulier, l'écartement maximal entre le support 101 et les éléments 102 et 103 est atteint lorsque les foyers Fc des lentilles convergentes supportées par le support 101 sont superposés aux foyers Fd' des lentilles divergentes supportées par les éléments 102 et 103. Le dispositif produit alors un faisceau rectiligne. L'écartement minimum entre le support 101 et les éléments 102 et 103 est atteint lorsque les foyers objet des lentilles divergentes supportées par les éléments 102 et 103 sont superposés aux centres optiques des premières lentilles convergentes du support 101.

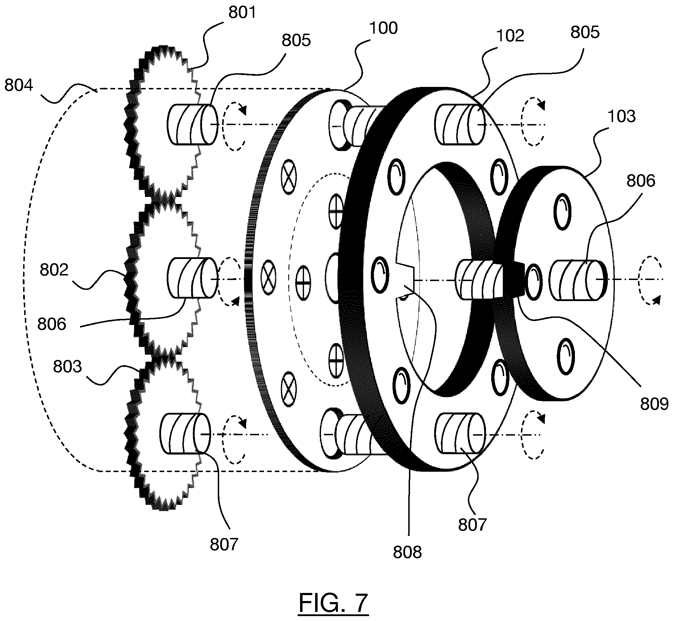

La **figure 7** illustre un exemple non limitatif de mécanisme permettant à un utilisateur d'ajuster la position des éléments 102 et 103 par rapport au support 101 tout en conservant l'alignement des sources lumineuses, lentilles convergentes et lentilles divergentes.

Le dispositif comprend un support circulaire 100 sur lequel sont montées des sources lumineuses telles que de LEDs. Les LEDs sont réparties selon une première zone centrale et un seconde zone périphérique. Les sources implantées dans la zone centrale sont adaptées pour transmettre des données par modulation de la lumière émise. Les sources lumineuses de la zone périphérique sont par exemple des LEDS dotées uniquement d'une fonction d'éclairage classique.

Pour cela, le dispositif comprend un modulateur adapté pour moduler la lumière émise par les LEDs de la partie centrale. Selon une réalisation particulière, le dispositif comprend en outre une interface réseau de type courant porteur, Wifi ou encore par exemple Bluetooth. Ainsi, les données reçues via l'interface réseau peuvent être retransmises par les LEDs de la zone centrale selon un protocole tel que le protocole LiFi. Selon un mode de réalisation particulier, le dispositif peut en outre comprendre des LEDs infrarouges adaptées pour transmettre des données dans la lumière non visible.

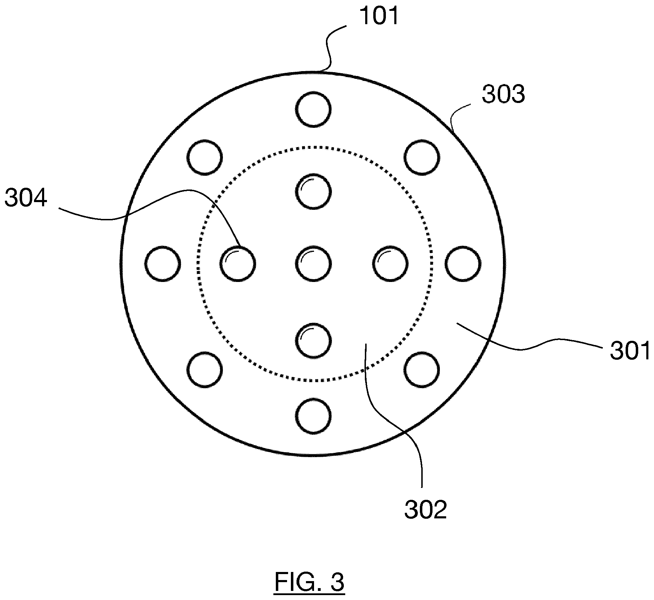

Les LEDs utilisées dans cet exemple sont munies d'une lentille convergente intégrée. Selon un mode de réalisation particulier, les lentilles convergentes sont montées sur un support tel que le support 101 décrit en référence à la **figure 3a.**

Le plateau supportant les LEDs comporte 3 orifices, un orifice étant positionné au centre du plateau, les deux autres orifices étant diamétralement opposés et situés dans la zone périphérique. Ces orifices sont adaptés pour y laisser tourner librement les tiges filetées 805, 806 et 807.

Le dispositif comprend également un élément 102 en forme d'anneau circulaire supportant des lentilles divergentes. L'élément 102 comporte deux orifices taraudés diamétralement opposés et adaptés pour recevoir les tiges filetées 805 et 806 afin qu'elles puissent s'y visser, les orifices étant positionnés de manière à correspondre aux orifices pratiqués sur le plateau 100. Les lentilles divergentes sont disposées de manière à correspondre aux LEDs de la zone périphérique du plateau lorsque les orifices du plateau 100 et de l'élément 102 sont superposés.

Le dispositif comporte également un élément 103 correspondant à la zone centrale du plateau et comportant en son centre un orifice taraudé adapté pour recevoir et visser une tige filetée 806. L'élément 103 comporte des lentilles divergentes disposées de manière à correspondre au LEDs de la partie centrale du plateau 100. L'élément 102 comporte en outre un évidement 809 destiné à recevoir une clavette 808 solidaire de l'élément 102 de manière à rendre les éléments 102 et 103 solidaires en rotation tout en permettant aux éléments 102 et 103 de se déplacer l'un par rapport à l'autre selon une trajectoire perpendiculaire au plateau 100.

Les tiges filetées 805, 806 et 807 se prolongent à l'intérieur d'un boitier 804 par 3 roues dentées 801, 802 et 803, les roues dentées 801 et 803 affleurant à l'extérieur du boitier de manière à ce qu'elles puisse être mises en rotation par une action de l'utilisateur, la roue dentée étant disposée au centre du boitier et en contact avec les roues 801 et 803. Ainsi, lorsqu'une rotation horaire est appliquée à la roue 801, un mouvement de rotation antihoraire est transmis à la roue centrale 802, la roue centrale 802 transmettant à son tour un mouvement de rotation horaire à la roue dentée 807.

Les roues dentées 801, 802 et 803 sont respectivement solidaires des tiges filetées 805, 806 et 807. Ainsi, une rotation d'une roue dentée applique une rotation de la tige filetée correspondante. La rotation des tiges filetées 805 et 807 dans les orifices taraudés correspondants sur l'élément 102 permet d'appliquer une translation selon une trajectoire perpendiculaire au plateau 100. La roue centrale 802 étant entrainée par la rotation des roues 801 et 803, la rotation de la tige filetée 806 dans l'orifice taraudé de l'élément 103 permet d'appliquer à ce dernier une translation selon une trajectoire perpendiculaire au plateau 100 dans une direction opposée à la translation appliquée à l'élément 102.

De cette façon, le dispositif permet, par une simple action d'un utilisateur sur une roue dentée affleurant du boitier, de modifier simultanément les caractéristiques d'un faisceau de lumière apte à transmettre des données et celles d'un second faisceau de lumière destiné à l'éclairage.

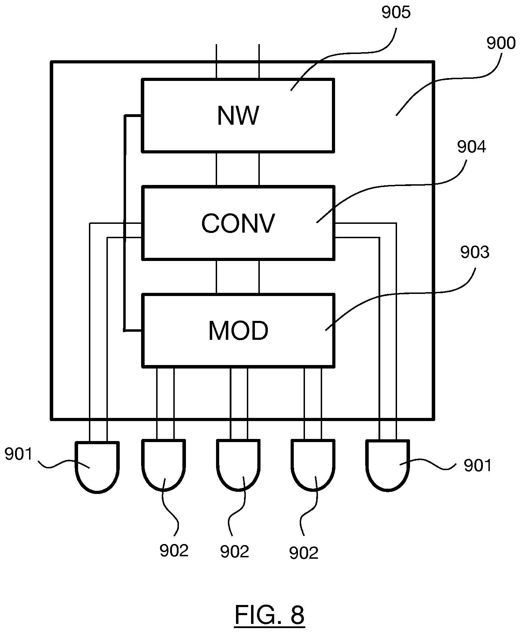

**La** **figure 8** illustre de manière simplifiée et non limitative un assemblage de composants électroniques adapté pour fournir une fonction d'éclairage seul et une fonction d'éclairage avec transmission de données selon un mode particulier de réalisation de l'invention.

L'assemblage peut être intégré dans un boitier 900, comme par exemple dans un bulbe ou un culot d'ampoule. Le dispositif comporte un premier ensemble de LEDs 901 reliées à une alimentation électrique 904 (CONV). Le dispositif comporte également un second ensemble de LEDs 902 reliées à un composant de modulation (MOD) adapté pour faire varier à haute fréquence l'éclairage fourni par les LEDs 902 de manière à transmettre des données par l'intermédiaire de la lumière visible. Il peut s'agir d'un microcontrôleur capable de fonctionner à haute fréquence et programmé à cet effet. Par exemple, le microcontrôleur RL78/I1A commercialisé par la société Renesas™ peut être adapté à une telle mise en oeuvre. Le composant de modulation 903 est relié à l'alimentation 904. Ainsi, les LEDs 901 ne peuvent fournir qu'une fonction d'éclairage alors que les LEDs 902 peuvent, outre une fonction d'éclairage, offrir une fonction de transmission de données. Dans un mode de réalisation particulier, le dispositif peut en outre comporter un module de communication 905 (NW) adapté pour recevoir et interpréter des données reçues par l'intermédiaire d'un réseau de communication. Par exemple, le module de communication peut être une interface réseau mettant en oeuvre une technologie de transmission sur courant porteur (CPL pour Courant Porteur en Ligne), une interface Bluetooth ou encore Wifi. Le module de communication 906 est relié au composant de modulation 903. De cette façon, le dispositif peut retransmettre dans le spectre de la lumière visible des données reçues depuis un réseau de communication, tout en fournissant une fonction d'éclairage classique par l'intermédiaire des LEDs 901.

Le dispositif trouve une utilisation particulièrement intéressante dans le cas d'un éclairage de produit dans une boutique. Le dispositif peut alors être configuré pour produire un premier faisceau d'éclairage focalisé sur le produit et un second faisceau plus large adapté à la transmission de données. Le faisceau d'éclairage permet ainsi de mettre en valeur un produit sur un présentoir alors que le faisceau de donnée, plus large, permet la transmission d'informations relatives au produit dans un périmètre configurable autour du produit.

Dans un contexte différent, le dispositif peut être configuré de manière à procurer un faisceau d'éclairage large et un faisceau de transmission de données étroit. Cette configuration est adaptée par exemple à l'éclairage de bureaux dans un espace ouvert (« openspace »), procurant à la fois un éclairage ambiant et une transmission de données sur une zone restreinte.

## Revendications

1. Dispositif d'éclairage comportant une pluralité de sources lumineuses montées sur un plateau (100), **caractérisé en ce qu'**il comporte :
- un premier ensemble de sources lumineuses (202) implanté dans une zone centrale (200) du plateau
- un second ensemble de sources lumineuses (203) implanté dans une zone périphérique (201) du plateau les sources lumineuses d'un des ensembles étant adaptées pour la transmission de données par modulation de la lumière visible, chacune des sources lumineuses d'au moins un des ensembles étant associées à au moins une première lentille convergente fixe (304) positionnée dans l'axe de la source lumineuse,
le dispositif étant caractérisé en ce les sources lumineuses de l'autre ensemble ne sont pas adaptées pour la transmission de données par modulation de la lumière visible et **en ce qu'**il comporte en outre, disposés parallèlement au plateau et superposés aux sources lumineuses et premières lentilles:
- un premier élément (103) adapté à la zone centrale comportant un premier ensemble de lentilles divergentes, chacune des lentilles étant disposée dans l'axe d'une source lumineuse de la zone centrale, et
- un second élément (102) adapté à la zone périphérique comportant un second ensemble de lentilles divergentes, chacune des lentilles étant disposée dans l'axe d'une source lumineuse de la zone périphérique.

2. Dispositif selon la revendication 1 **caractérisé en ce que** les sources lumineuses sont des LEDs.

3. Dispositif selon l'une quelconque des revendications précédentes **caractérisé en ce que** les premiers et seconds éléments sont mobiles par translation selon un axe perpendiculaire au plateau.

4. Dispositif selon la revendication 3 **caractérisé en ce qu'**il comporte un mécanisme de réglage adapté pour appliquer une translation selon un axe perpendiculaire au plateau à au moins un des ensembles de lentilles divergentes.

## Patentansprüche

1. Beleuchtungsvorrichtung, umfassend mehrere Lichtquellen, die auf einer Platte (100) befestigt sind, **dadurch gekennzeichnet, dass** sie aufweist:
- eine erste Anordnung von Lichtquellen (202), die in einem zentralen Bereich (200) der Platte angeordnet ist,
- eine zweite Anordnung von Lichtquellen (203), die in einem Umfangsbereich (201) der Platte angeordnet ist,
wobei die Lichtquellen von einer der Anordnungen für das Übertragen von Daten durch Modulation des sichtbaren Lichts geeignet sind, wobei jede der Lichtquellen von mindestens einer der Anordnungen mit mindestens einer ersten festen konvergierenden Linse (304) verbunden sind, die in der Achse der Lichtquelle angeordnet ist,
wobei die Vorrichtung **dadurch gekennzeichnet ist, dass** die Lichtquellen der anderen Anordnung nicht für das Übertragen von Daten durch Modulation des sichtbaren Lichts geeignet sind und dadurch, dass sie ferner parallel zu der Platte angeordnet und die Lichtquellen und ersten Linsen überlagernd aufweist:
- ein erstes Element (103), das an den ersten zentralen Bereich angepasst ist, umfassend eine erste Anordnung von divergierenden Linsen, wobei jede der Linsen in der Achse einer Lichtquelle des zentralen Bereichs angeordnet ist, und
- ein zweites Element (102), das an den ersten Umfangsbereich angepasst ist, umfassend eine zweite Anordnung von divergierenden Linsen, wobei jede der Linsen in der Achse einer Lichtquelle des Umfangsbereichs angeordnet ist.

2. Vorrichtung nach Anspruch 1, **dadurch gekennzeichnet, dass** die Lichtquellen LEDs sind.

3. Vorrichtung nach einem der vorhergehenden Ansprüche, **dadurch gekennzeichnet, dass** die ersten und zweiten Elemente gemäß einer Achse, die senkrecht zu der Platte ist, translatorisch beweglich sind.

4. Vorrichtung nach Anspruch 3, **dadurch gekennzeichnet, dass** sie einen Einstellmechanismus aufweist, der geeignet ist, um eine Translation gemäß einer Achse, die senkrecht zu der Platte ist, auf mindestens eine der Anordnung von divergierenden Linsen anzuwenden.

## Claims

1. Illuminating device including a plurality of light sources mounted on a deck (100), **characterized in that** it includes:
- a first set of light sources (202) placed in a central zone (200) of the deck; and
- a second set of light sources (203) placed in a peripheral zone (201) of the deck,
the light sources of one of the sets being suitable for transmitting data by modulation of visible light, each of the light sources of at least one of the sets being associated with at least one fixed convergent first lens (304) positioned on the axis of the light source, the device being **characterized in that** the light sources of the other set are not suitable for transmitting data by modulation of visible light and **in that** it furthermore includes, arranged parallel to the deck and superposed on the light sources and first lenses:
- a first element (103) adapted to the central zone including a first set of divergent lenses, each of the lenses being arranged on the axis of a light source of the central zone; and
- a second element (102) adapted to the peripheral zone including a second set of divergent lenses, each of the lenses being arranged on the axis of a light source of the peripheral zone.

2. Device according to Claim 1, **characterized in that** the light sources are LEDs.

3. Device according to either one of the preceding claims, **characterized in that** the first and second elements are translationally movable along an axis perpendicular to the deck.

4. Device according to Claim 3, **characterized in that** it includes an adjusting mechanism suitable for applying a translation along an axis perpendicular to the deck to at least one of the sets of divergent lenses.
